# EUROPÄISCHE PATENTSCHRIFT

(11) **EP 2 673 304 B1**
(45) Veröffentlichungstag und Bekanntmachung des Hinweises auf die Patenterteilung: **03.02.2016**
(21) Anmeldenummer: 12703771.1
(22) Anmeldetag: 07.02.2012
(51) Int. Cl.: C08F 4/00, C08F 210/00, C08G 61/08, C08J 3/00

(54) **KAUTSCHUKMATERIAL MIT BARRIEREMATERIAL AUS CYCLOOLEFIN-COPOLYMEREN**
RUBBER MATERIAL WITH BARRIER MATERIAL FORMED FROM CYCLOOLEFIN COPOLYMERS
MATÉRIAU CAOUTCHOUC, COMPRENANT UN MATÉRIAU BARRIÈRE COMPOSÉ DE COPOLYMÈRES DE CYCLO-OLÉFINE

(30) Priorität: 11.02.2011 EP 11154240
(43) Veröffentlichungstag der Anmeldung: 18.12.2013
(73) Patentinhaber: BASF SE, 67056 Ludwigshafen (DE)
(72) Erfinder: MÜLLER, Kevin, 64646 Heppenheim (DE); DAHMEN, Stefan, 67251 Freinsheim (DE)
(86) Internationale Anmeldenummer: PCT/EP2012/051992
(87) Internationale Veröffentlichungsnummer: WO 2012/107418

(56) Entgegenhaltungen:
- EP-A2- 0 488 135
- WO-A1-00/46255
- WO-A1-02/26858
- WO-A1-2009/154849
- US-A- 3 778 420
- US-A- 4 025 708
- US-A1- 2007 037 940

## Beschreibung

Die Erfindung betrifft ein Verfahren zur Ausrüstung eines Kautschukmaterials mit einem Barrierematerial in Form eines Copolymers, welches herstellbar ist durch ringöffnende Metathesepolymerisation (ROMP) von (a) Olefinmonomeren, ausgewählt aus monocyclischen Olefinmonomeren mit einer oder zwei endocyclischen C-C-Doppelbindungen und bicyclischen Olefinmonomeren mit einer endocyclischen C-C-Doppelbindung und (b) polycyclischen Olefinmonomeren mit mindestens zwei C-C-Doppelbindungen.

Bei Fahrzeugluftreifen ist es wichtig, dass gewährleistet ist, dass die Druckluft oder das Füllgas mit dem erforderlichen Druckwert und dem notwendigen Gasvolumen für möglichst lange Zeit einen funktionsfähigen Reifenbetrieb gestattet. Üblicherweise sind deshalb herkömmliche Luftreifen im Reifeninnenraum mit einer gasundurchlässigen bzw. möglichst niedrig gasdurchlässigen Gummischicht versehen. Diese Reifeninnenschicht dient zur Abdichtung des gasgefüllten Innenraums und ersetzt bei schlauchlosen Reifen den Schlauch. Als Material kann z.B. Halobutyl enthaltende, vulkanisierbare Kautschukmischung oder Butylkautschuk verwendet werden.

Ringöffnende Metathesepolymerisationen werden beschrieben in der EP 1847558 A1 oder in der US-Patentanmeldung 61/257063. Durch ringöffnende Metathesepolymerisation aus Cycloolefinen hergestellte Homopolymere aus Cycloocten oder aus Cyclopentadien sind häufig spröde, duroplastische oder nicht filmbildende Materialien, welche für die Bildung von flexiblen Beschichtungen ungeeignet sind oder sie haben schlechte Barriereeigenschaften oder die Glasübergangstemperatur ist nicht auf den gewünschten Wert einstellbar. Ringöffnende Methathesepolymerisationen zur Darstellung von Copolymeren aus Cycloolefinen sind in den US-Patentanmeldungen 4025708 A, 3778420 A, 2007/0037940 A1, sowie in den Anmeldungen EP 0488135 A2 und WO 2009/154849 A1 beschrieben. In der US-Patentanmeldung 4025708 A wird die potentielle Verwendung eines Copolymers aus Cyclopenten und Cyclopentadien als Reifenmaterial vorgeschlagen. In den Anmeldungen WO 00/46255 und WO 02/26858 A1 wird eine Vielzahl potentieller Anwendungsmöglichkeiten von Copolymeren aus Cycloolefinen beschrieben, unter anderem deren potentielle Verwendung als Beschichtungsmaterialien und/oder Klebstoffe (WO 02/26858 A1).

Aufgabe der vorliegenden Erfindung war es, ein Verfahren zur Ausrüstung von Kautschukprodukten zur Verfügung zu stellen. Kautschukprodukte sind insbesondere, aber nicht auschließlich Luftreifen. Mittels des Verfahrens sollen Kautschukprodukte mit alternativen Barrierematerialien ausgerüstet werden. Barrierematerialien sollen einfach, kostengünstig und effizient anwendbar sein und/oder weisen gute oder verbesserte Gasbarriereeigenschaften aufweisen. n Gegenstand der Erfindung ist ein Verfahren zur Ausrüstung eines Kautschukmaterials wobei mindestens ein Copolymer auf das Kautschukmaterial aufgebracht oder in das Kautschukmaterial eingebracht wird und das Copolymer herstellbar ist durch ringöffnende Metathesepolymerisation von
a) mindestens einem Olefinmonomer, ausgewählt aus der Gruppe bestehend aus monocyclischen Olefinmonomeren mit einer oder zwei endocyclischen C-C-Doppelbindungen und bicyclischen Olefinmonomeren mit einer endocyclischen C-C-Doppelbindung und
b) mindestens einem polycyclischen Olefinmonomer mit mindestens zwei C-C-Doppelbindungen.
wobei die Ausrüstung nach einer oder mehreren der folgenden Methoden erfolgt: Imprägnierung durch Tränkung, durch Besprühen oder durch Bestreichen, Beschichten, Kalandireren; und/oder wobei das Copolymer in Form einer wässrigen Dispersion des Copolymers aufgebracht wird und durch Trocknen der Dispersion auf dem Trägersubstrat ein Film gebildet wird.

Vorzugsweise wird das Copolymer in Form einer Polymerschicht einer Dicke von mindestens 1 µm eingesetzt. Vorzugsweise beträgt das molare Verhältnis von Olefinmonomeren a) zu polycyclischen Olefinmonomeren b) von 99:1 bis 15:85 oder von 80:20 bis 15:85.

Gegenstand der Erfindung ist demzufolge auch ein Verfahren zur Ausrüstung eines Kautschukmaterials mit Gasbarriereeigenschaften, wobei mindestens eines der oben genannten und nachfolgend näher beschriebenen Copolymere auf das Kautschukmaterial aufgebracht oder in das Kautschukmaterial eingebracht wird.

Gegenstand der Erfindung ist auch die Verwendung der vorgenannten und unten näher beschriebenen Copolymere zur Verringerung der Gasdurchlässigkeit von Kautschukmaterial.

Das mit dem Copolymer gemäß dem erfindungsgemäßen Verfahren versehene Kautschukmaterial weist eine Gasbarriereeigenschaft auf (z.B. gegen Luft, Sauerstoff, Stickstoff, Argon, Kohlendioxid etc.), wobei die Barriereeigenschaft durch die erfindungsgemäße Verwendung des Copolymers erzeugt oder verstärkt wird. Der Begriff Barriereeigenschaft bedeutet eine gegenüber unbeschichtetem Trägersubstrat verringerte Transmission bzw. Permeabilität gegenüber bestimmten Stoffen. Sauerstoff- bzw. Gasbarriereeigenschaften können z.B. mit dem in den Beispielen beschriebenem Permeabilitätstest gemessen werden. Vorzugsweise beträgt die Sauerstofftransmissionsrate für erfindungsgemäß beschichtete Substrate weniger als 30%, insbesondere weniger als 15% oder weniger als 5%, z.B. zwischen 0,1% und 3% des Wertes der unbehandelten Substrate (gemessen bei 23°C und 85% relativer Luftfeuchtigkeit).

Die gemäß dem erfindungsgemäßen Verfahren eingesetzten Copolymere sind herstellbar durch ringöffnende Metathesepolymerisation. Unter einer Metathesereaktion wird ganz allgemein eine chemische Reaktion zwischen zwei Verbindungen verstanden, bei der eine Gruppe zwischen beiden Reaktionspartnern ausgetauscht wird. Handelt es sich dabei um eine organische Metathesereaktion, werden formal die Substituenten an einer Doppelbindung ausgetauscht. Von besonderer Bedeutung ist jedoch die metallkomplexkatalysierte ringöffnende Metathesereaktion von organischen Cycloolefinverbindungen ("ring opening metathesis polymerization" kurz ROMP), durch die polymere Polyolefine zugänglich werden. Als katalytische Metallkomplexe werden insbesondere Metallcarbenkomplexe der allgemeinen Struktur Met=CR₂ eingesetzt, wobei R einen organischen Rest bedeutet. Aufgrund der hohen Hydrolyseempfindlichkeit der Metallcarbenkomplexe können die Metathesereaktionen in wasserfreien organischen Lösungsmitteln oder den Olefinen selbst durchgeführt werden (siehe beispielsweise US-A 2008234451, EP-A 0824125). Zur Vermeidung von aufwändigen Reinigungsschritten zur Abtrennung von große Mengen an Lösungsmittel oder an nicht umgesetzten Olefinen kann die Metathesereaktion von Olefinen auch in wässrigem Medium durchgeführt werden (DE 19859191; US-Patentanmeldung 61/257063).

Die gemäß dem erfindungsgemäßen Verfahren eingesetzten Copolymere werden gebildet aus
a) mindestens einem Olefinmonomer, ausgewählt aus der Gruppe bestehend aus monocyclischen Olefinmonomeren mit einer oder zwei endocyclischen C-C-Doppelbindungen und bicyclischen Olefinmonomeren mit einer endocyclischen C-C-Doppelbindung und
b) mindestens einem polycyclischen Olefinmonomer mit mindestens zwei C-C-Doppelbindungen.

Das molare Verhältnis von Olefinmonomeren a) zu polycyclischen Olefinmonomeren b) beträgt vorzugsweise von 80:20 bis 15:85, vorzugsweise von 65:35 bis 20:80.

Die Olefinmonomere a) weisen vorzugsweise eine Ringspannung von mindestens 2 kcal/mol. Die polycyclischen Olefinmonomere b) weisen vorzugsweise eine Ringspannung von mindestens 15 kcal/mol, bezogen auf den Ring mit der höchsten Spannung.

Olefinmonomere a) sind z.B. Cyclobuten, Cyclopenten, 2-Methylcyclopenten-1, 3-Methylcyclopenten-1, 4-Methylcyclopenten-1, 3-Butylcyclopenten-1, Cyclohexen, 2-Methylcyclohexen-1, 3-Methylcyclohexen-1, 4-Methylcyclohexen-1, 1,4-Dimethylcyclohexen-1, 3,3,5-Trimethylcyclohexen-1, Cyclohepten, 1,2-Dimethylcyclohepten-1, cis-Cycloocten, trans-Cycloocten, 2-Methylcycloocten-1, 3-Methylcycloocten-1, 4-Methylcycloocten-1, 5-Methylcycloocten-1, Cyclononen, Cyclodecen, Cycloundecen, Cyclododecen, Cyclooctadien, Cyclopentadien, Cyclohexadien und Norbornen, wobei monocyclische Olefine mit einer C-C-Doppelbindung, insbesondere cis-Cycloocten besonders bevorzugt sind.

Bevorzugte polycyclische Olefinmonomere b) sind bicyclische Diene, z.B. Norbornadien, Dicyclopentadien (3a,4,7,7a-Tetrahydro-1H-4,7-methano-inden), Bicyclo[2.2.2]octa-2,5-dien, Bicyclo[3.3.0]octa-2,6-dien und Cyclopentadien-Oligomere, wie z.B. Tricyclopentadien. Besonders bevorzugt ist Dicyclopentadien.

In einer bevorzugten Ausführungsform ist das Copolymer gebildet durch ringöffnende Metathesepolymerisation von cis-Cycloocten und Dicyclopentadien.

Die Herstellung der gemäß dem erfindungsgemäßen Verfahren eingesetzten Copolymere erfolgt vorzugsweise in wässrigem Medium. Dabei kann die ringöffnende Metathesereaktion dergestalt erfolgen, dass Wasser und Dispergiermittel in einem Polymerisationsgefäß vorgelegt werden, ein als Katalysator eingesetzter organometallischer Carbenkomplex im Cycloolefin gelöst wird, die Cycloolefin/Metall-komplexlösung in die wässrige Dispergiermittellösung eingebracht wird, die dabei gebildete Cycloolefin/Metallkomplex-Makroemulsion in eine Cycloolefin/Metallkomplex-Miniemulsion überführt wird und diese bei Raumtemperatur zu einer wässrigen Polyolefin-Dispersion umgesetzt wird. Vorzugsweise erfolgt die ringöffnende Metathesereaktion dergestalt, dass wenigstens eine Teilmenge des Wassers, wenigstens eine Teilmenge Dispergiermittel, wenigstens eine Teilmenge der Monomeren in Form einer wässrigen Monomerenmakroemulsion mit einem mittleren Tröpfchendurchmesser ≥ 2 µm vorgelegt werden, danach unter Energieeintrag die Monomerenmakroemulsion in eine Monomerenminiemulsion mit einem mittleren Tröpfchendurchmesser ≤ 1500 nm überführt wird, und danach der erhaltenen Monomerenminiemulsion bei Polymerisationstemperatur die gegebenenfalls verbliebene Restmenge des Wassers, die gegebenenfalls verbliebene Restmenge des Dispergiermittels, die gegebenenfalls verbliebene Restmenge der Monomeren und die Gesamtmenge eines als Katalysator eingesetzten organometallischen Carbenkomplexes zugegeben werden.

Als Metathesekatalysatoren können organometallische Carbenkomplexe eingesetzt. Metalle sind z.B. Übergangsmetalle der 6., 7. oder 8. Nebengruppe, bevorzugt Molybdän, Wolfram, Osmium, Rhenium oder Ruthenium, wovon Osmium und Ruthenium bevorzugt sind. Besonders bevorzugt werden Ruthenium-Alkylidenkomplexe eingesetzt. Solche Metathesekatalysatoren sind aus dem Stand der Technik bekannt und werden z.B. in R.H. Grubbs (Ed.) "Handbook of Metathesis", 2003, Wiley-VCH, Weinheim, WO 93/20111, WO 96/04289, WO 97/03096, WO 97/06185, J. Am. Soc. 1996, S. 784-790, Dalton Trans. 2008, S. 5791-5799 und in Coordination Chemistry Reviews, 2007, 251, S. 726-764 beschrieben.

Die Konzentration der Copolymeren in den zur Beschichtung eingesetzten Lösungen oder wässrigen Dispersionen beträgt vorzugsweise mindestens 1 Gew.-%, insbesondere mindestens 5 Gew.-% und bis zu 50 oder bis zu 70 Gew.%. Meistens liegt der Gehalt der Copolymeren in der wässrigen Dispersion bei 10 bis 60 Gew.% oder bei 15 bis 55 Gew.%, insbesondere bei 20 bis 50 Gew.-%.

Bevorzugte wässrige Dispersionen der Copolymere haben bei pH-Werten von 4 und einer Temperatur von 20°C eine Viskosität von 10 bis 150 000 mPas, oder 200 bis 5000 mPas (gemessen mit einem Brookfield-Viskosimeter bei 20°C, 20 UpM, Spindel 4). Die mittlere Teilchengröße der in der wässrigen Dispersion dispergierten Copolymerpartikel beträgt beispielsweise von 0,02 bis 100 µm, vorzugsweise 0,05 bis 10 µm. Sie kann z. B. mit Hilfe der optischen Mikroskopie, der Lichtstreuung, der hydrodynamischen Chromatographie oder der Gefrierbruchelektronenmikroskopie bestimmt werden.

Die Kautschukbestandteile des Kautschukmaterials können beispielsweise ausgewählt sein aus Dienkautschuk, Naturkautschuk, Butylkautschuk, synthetischem Polyisopren, Polybutadien, Styrol-Butadien-Copolymer, Isopren-Butadien-Kautschuk, Styrol-Isopren-Butadien-Kautschuk , Acrylnitril-Butadien-Kautschuk, Ethylen-Propylen-Kautschuk und Chloroprenkautrschuk.

Vorzugsweise handelt es sich bei dem Kautschukmaterial um einen Bestandteil eines Luftreifens, insbesondere eine Reifeninnenschicht eines Luftreifens oder eine Reifenkarkasse eines Luftreifens.

In einer Ausführungsform werden die Kautschukmaterialien selber mit einer Lösung oder wässrigen Dispersion mindestens eines der oben beschriebenen Copolymere ausgerüstet. In einer anderen Ausführungsform werden Bestandteile eines kautschukhaltigen Gegenstands, insbesondere von Luftreifen mit dem Barrierematerial ausgerüstet und in den kautschukhaltigen Gegenstand, vorzugsweise Luftreifen, eingebracht. Beispielsweise kann die Textilkordeinlage von Luftreifen mit den erfindungsgemäß einzusetzenden Copolymeren ausgerüstet werden.

Gegenstand der Erfindung ist ein Verfahren zur Ausrüstung eines Kautschukmaterials, wobei mindestens eines der hierin beschriebenen Copolymere auf das Kautschukmaterial aufgebracht oder in das Kautschukmaterial eingebracht wird. Die Ausrüstung erfolgt nach einer oder mehreren der folgenden Methoden: Imprägnierung durch Tränkung, durch Besprühen oder durch Bestreichen, Beschichten, Kalandrieren. Die zur Beschichtung eingesetzten Lösungen oder Dispersionen können weitere Zusatz- oder Hilfsstoffe enthalten, z.B. Verdicker zur Einstellung der Rheologie, Benetzungshilfsmittel, organische oder anorganische Füllstoffe oder Bindemittel.

Vorzugsweise wird das Copolymer in Form einer wässrigen Dispersion des Copolymers aufgebracht und es wird durch Trocknen der Dispersion auf dem Trägersubstrat ein Film gebildet.

Gegenstand der Erfindung ist auch ein Verfahren zur Ausrüstung eines Kautschukmaterials bei dem das Kautschukmaterial ein Bestandteil eines Luftreifens ist.

Das Aufbringen als Film kann als Sprüh- oder Streichfilm erfolgen, z.B. durch Walzen-, Rakel-, Luftbürsten- oder Gussstreichverfahren. Das Aufbringen kann auch als Folie erfolgen, welche als Träger dient und dann mit der Karkasse verklebt oder vernetzt (vulkanisiert) wird. Geeignete Folienträger sind z.B. Kautschuk-, Polyolefin-, Polyester-, Polyamid- oder Polyurethanfolienträger.

Alternativ kann auch eine Anwendung des Copolymers in Form eines Laminats zwischen zwei Trägerfolien erfolgen, wobei das Laminat dann mit der Karkasse verklebt oder vernetzt wird.

Folglich ist Gegenstand der Erfindung auch ein Verfahren zur Ausrüstung eines Kautschukmaterials bei dem das Kautschukmaterial eine Reifeninnenschicht eines Luftreifens oder eine Reifenkarkasse eines Luftreifens ist.

Die Copolymere können auch als selbsttragender Film eingesetzt werden.

Die Anwendung kann beispielsweise auf Beschichtungsmaschinen in der Weise vorgenommen werden, dass man auf eine Trägerfolie aus einem Kunststoff die Beschichtungszusammensetzung aufträgt. Sofern bahnförmige Materialien verwendet werden, wird die Polymerdispersion üblicherweise aus einer Wanne über eine Auftragswalze aufgetragen und mit Hilfe einer Luftbürste egalisiert.
Andere Möglichkeiten, die Beschichtung aufzubringen, gelingen z.B. mit Hilfe des Reverse Gravure-Verfahrens, mit Sprühverfahren oder mit einem Rollrakel oder mit anderen, dem Fachmann bekannten Beschichtungsverfahren. Das Trägersubstrat ist dabei auf mindestens einer Seite beschichtet, d.h. es kann einseitig oder beidseitig beschichtet sein.

Um die Haftung auf einer Folie noch zu verbessern, kann die Trägerfolie zuvor einer CoronaBehandlung unterworfen oder alternativ Haftvermittler, wie z.B. Polyethylenimine, eingesetzt werden. Die auf die flächigen Materialien aufgetragenen Mengen betragen z.B. vorzugsweise 1 bis 800 g (Polymer, fest) pro m², vorzugsweise 1 bis 400 g/m² oder 5 bis 200 g/m². Nach dem Aufbringen der Beschichtungszusammensetzungen auf die Trägersubstrate wird das Lösungs- bzw. Dispergiermittel verdampft. Hierfür kann man beispielsweise bei kontinuierlichem Arbeiten das Material durch einen Trocknerkanal führen, der mit einer Infrarot-Bestrahlungsvorrichtung ausgestattet sein kann. Danach wird das beschichtete und getrocknete Material über eine Abkühlwalze geführt und schließlich aufgewickelt. Die Dicke der getrockneten Beschichtung beträgt mindestens 1 µm vorzugsweise 1 bis 400 µm, besonders bevorzugt 5 bis 200 µm. Die Dicke der Trägerfolien liegt im Allgemeinen in dem Bereich von 10 µm bis 1 cm.

Die nach dem erfindungsgemäßen Verfahren beschichteten Substrate zeigen eine hervorragende Gasbarrierewirkung. Aufgrund dieser Eigenschaft eignen sich die erfindungsgemäß ausgerüsteten Kautschukmaterialien, insbesondere für Luftreifen.

### Beispiele

Es wurden folgende Copolymerdispersionen eingesetzt (Monomerverhältnisse beziehen sich auf molare Verhältnisse):

### Dispersion D1:

30%ige wässrige Poly(dicyclopentadien-co-octenamer)-Dispersion, hergestellt durch ringöffnende Metathesepolymerisation (ROMP) aus Dicyclopentadien und cis-Cycloocten (50:50) unter Verwendung eines Ruthenium-alkylidenkatalysators.
Zahlenmittlere Teilchengröße: 270 nm

### Dispersion D2:

30%ige wässrige Poly(dicyclopentadien-co-octenamer)-Dispersion, hergestellt durch ringöffnende Metathesepolymerisation (ROMP) aus Dicyclopentadien und cis-Cycloocten (60:40) unter Verwendung eines Ruthenium-alkylidenkatalysators.

### Dispersion D3:

30%ige wässrige Poly(dicyclopentadien-co-octenamer)-Dispersion, hergestellt durch ringöffnende Metathesepolymerisation (ROMP) aus Dicyclopentadien und cis-Cycloocten (70:30) unter Verwendung eines Ruthenium-alkylidenkatalysators.

### Dispersion D4:

40%ige wässrige Poly(dicyclopentadien-co-octenamer)-Dispersion, hergestellt durch ringöffnende Metathesepolymerisation (ROMP) unter Verwendung eines Rutheniumalkylidenkatalysators aus Dicyclopentadien und cis-Cyclooctadien (50:50).
Zahlenmittlere Teilchengröße der dispergierten Latexpartikel: 265 nm

### Dispersion D5:

30%ige wässrige Poly(dicyclopentadien-co-octenamer)-Dispersion, hergestellt durch ringöffnende Metathesepolymerisation (ROMP) aus Dicyclopentadien und cis-Cycloocten (2:98) unter Verwendung eines Ruthenium-alkylidenkatalysators. Zahlenmittlere Teilchengröße: 419 nm.

### Bestimmung der Sauerstoffpermeabilität einer selbsttragenden Polyalkenamerfolie:

Die Herstellung der Folie erfolgte durch Ausgießen einer Polyalkenamerdispersion in eine Silikonform mit den Maßen 15 cm x 10 cm x 0,5 cm (Länge x Breite x Höhe). Der ausgegossene Dispersionsfilm wurde für 48h bei 25°C getrocknet und anschließend für 10 Minuten bei einer Temperatur von 65°C getempert.

Die trockenen und feuchten Sauerstoffpermeabilitäten wurden mit einem MOCON OXTRAN^{®} 2/21 gemessen, dessen Messprinzip auf der Trägergasmethode beruht (ASTM D-3985). Bei der Trägergasmethode werden die maskierten Probenfilme (ohne Trägermaterial) mit einer Fläche, in diesem Fall von 5 cm², in einer luftdichten Zelle mit beidseitigem Hohlraum eingebaut. Auf der einen Seite der Probe wird ein Trägergas (95% N₂ und 5% H₂) und auf der anderen Seite das Messgas (100% O₂) drucklos vorbeigeleitet. Das durch die Probe diffundierende Messgas wird von dem Trägergas aufgenommen und zu einem coulometrischen Sensor geleitet. Somit kann die Sauerstoffkonzentration als Funktion der Zeit ermittelt werden. Alle Messungen wurden bei 23° Celsius und einer definierten relativen Luftfeuchte (RH) durchgeführt. Beide Seiten der Probe wurden der definierten Luftfeuchte ausgesetzt. Die Konditionierung des Gerätes und der Probe dauerte ca. eine halbe Stunde. Die Maschinenlaufzeit betrug für die Messungen 1 bis 4 Tage. Von jeder Probe wurde eine Doppelbestimmung durchgeführt. Für das Messverfahren wurde die Transmissionsrate (cm³/(m²*Tag)) der Probe mit der mittleren Dicke der Folie, welche an 5 verschiedenen Stellen bestimmt wurde, auf 1 µm und 1 bar normalisiert. Durch diese Nörmalisierung ergab sich die Permeationsrate [cm³µm/(m²*Tag*bar)].

In einer ersten Messung wurde die Sauerstoffpermeabilität unter trockenen Bedingungen bestimmt. In einer zweiten Messung wurde die Sauerstoffpermeabilität unter feuchten Bedingungen (85% relative Luftfeuchte) bestimmt. Die Ergebnisse sind in Tabelle 1 aufgeführt. Die Foliendicke betrug 386,8 µm.

**Tabelle 1: Sauerstoffpermeabilität einer selbsttragenden Polyalkenamerfolie**

| Probe | Transmissionsrate | Permeationsrate | Transmissionsrate | Permeationsrate |
|---|---|---|---|---|
| | 23°C, trocken | 23°C, trocken | 23°C, 85% RH | 23°C, 85% RH |
| | [[cm³/(m²*Tag)] | [cm³µm/(m²*Tag*bar)] | [cm³/(m²*Tag)] | [cm³µm/(m²*Tag*bar)] |
| D1 | 0,272 | 104,8 | 0,254 | 98,247 |

### Bestimmung der Wasserdampfpermeabilität einer selbsttragenden Polyalkenamerfolie:

Die Herstellung der Folie erfolgte wie oben beschrieben. Die Messung der Wasserdampfpermeabilitäten erfolgte bei 85% relativer Luftfeuchte mit einem MOCON PERMATRAN-W® 3/33, dessen Messprinzip ebenfalls auf der Trägergas-Methode beruht. Das Gerät arbeitet nach der ASTM F-1249. Bei der Trägergasmethode werden die maskierten Probenfilme (ohne Trägermaterial) mit einer Fläche, in diesem Fall von 5 cm², in einer luftdichten Zelle mit beidseitigem Hohlraum eingebaut. Auf der einen Seite der Probe wird ein Trägergas (trockenes N₂) und auf der anderen Seite das Messgas (N₂ + Wasserdampf) drucklos vorbeigeleitet. Das durch die Probe diffundierende Messgas wird von dem Trägergas aufgenommen und zu einem selektiven Sensor geleitet. Bei Wasserdampfmessgeräten wird ein IR-Sensor eingesetzt. Somit kann die Wasserdampfkonzentration als Funktion der Zeit ermittelt werden. Die Messungen wurden bei 23° Celsius durchgeführt. Die Konditionierung des Gerätes dauerte ca. 30 Minuten. Die Maschinenlaufzeit betrug für alle Messungen 1 bis 4 Tage. Die Transmissionsrate der Probe wurde bei einer möglichst genauen Einstellung der relativen Luftfeuchte von 85% gemessen, der kleine messtechnische Fehler bei der Einstellung der Feuchte wurde anschließend rechnerisch korrigiert. Hierbei wurde angenommen, dass die Transmissionsrate linear mit der relativen Luftfeuchte im Messbereich korreliert. Für das Messverfahren wurde die Transmissionsrate (g/(m²*Tag)) der Probe mit der mittleren Dicke der Folie, welche an 5 verschiedenen Stellen bestimmt wurde, normalisiert. Durch diese Normalisierung ergab sich die Permeationsrate (g*µm/(m²*Tag)). Die Ergebnisse sind in Tabelle 2 aufgeführt. Die Foliendicke betrug 320 um.

**Tabelle 2: Wasserdampfpermeabilität einer selbsttragenden Polyalkenamerfolie**

| Probe | Transmissionsrate | Permeationsrate |
|---|---|---|
| | 23°C, 85% RH | 23°C, 85% RH |
| | [g/(m²*Tag)] | [g*µm/(m²*Tag)] |
| D1 | 3,76 | 1203 |

Bestimmung der Sauerstoffpermeabilität einer mit Polyalkenamer beschichteten Kautschukfolie Die Sauerstoffbarrierewirkung wurde gemessen durch Bestimmung der Sauerstofftransmission eines mit Poly(dicyclopentadien-co-octenamer) beschichteten Naturkautschuksubstrates. Die Bestimmung der Sauerstoffbarriere wurde mit einem MOCON OXTRAN^{®} 2/21 durchgeführt, dessen Messprinzip auf der Trägergasmethode beruht (ASTM D-3985). Gemessen wurde bei 23 °C mit synthetischer Luft (21% Sauerstoff). Von jeder Probe wurde eine Doppelbestimmung durchgeführt. Die Sauerstoffbarrierewirkung wurde bei 0 %und 85 % relativer Luftfeuchte gemessen.

### Probe 1:

Unbeschichteter Naturkautschuk (Fa. Erwin Telle GmbH, Nürnberg),
Substratdicke: 346 µm

### Probe 2:

Ein Naturkautschuksubstrat (Fa. Erwin Telle GmbH, Nürnberg) mit einer Dicke von 346 µm wurde mit Ethanol gereinigt, mit Poly(dicyclopentadien-co-octenamer) der Dispersion D1 beschichtet, 10 min bei 50°C getrocknet und anschließend 7 Tage bei Raumtemperatur gelagert. Die Dicke der Poly(dicyclopentadien-co-octenamer)-Beschichtung auf dem Naturkautschuksubstrat betrug 8µm.

Die Ergebnisse der Sauerstoffbarrierewirkung sind in Tabelle 1 zusammengefasst:

**Tabelle 1:**

| Probe | Transmissionsrate [cm³/(m²*Tag)], | Transmissionsrate [cm³/(m²*Tag)], |
|---|---|---|
| | 0% relativer Luftfeuchte | 85% relativer Luftfeuchte |
| Probe 1 | 5010 | 5080 |
| Probe 2 | 66,1 | 93,5 |

## Patentansprüche

1. Verfahren zur Ausrüstung eines Kautschukmaterials, wobei mindestens ein Copolymer auf das Kautschukmaterial aufgebracht oder in das Kautschukmaterial eingebracht wird und das Copolymer herstellbar ist durch ringöffnende Metathesepolymerisation von
a) mindestens einem Olefinmonomer, ausgewählt aus der Gruppe bestehend aus monocyclischen Olefinmonomeren mit einer oder zwei endocyclischen C-C-Doppelbindungen und bicyclischen Olefinmonomeren mit einer endocyclischen C-C-Doppelbindung und
b) mindestens einem polycyclischen Olefinmonomer mit mindestens zwei C-C-Doppelbindungen.
wobei die Ausrüstung nach einer oder mehreren der folgenden Methoden erfolgt: Imprägnierung durch Tränkung, durch Besprühen oder durch Bestreichen, Beschichten, Kalandrieren;
und/oder wobei das Copolymer in Form einer wässrigen Dispersion des Copolymers aufgebracht wird und durch Trocknen der Dispersion auf dem Trägersubstrat ein Film gebildet wird.

2. Verfahren, nach dem vorhergehenden Anspruch, **dadurch gekennzeichnet, dass** das molare Verhältnis von Olefinmonomeren a) zu polycyclischen Olefinmonomeren b) von 99:1 bis 15:85, vorzugsweise von 80:20 bis 15:85 beträgt.

3. Verfahren nach einem der vorhergehenden Ansprüche, **dadurch gekennzeichnet, dass** die Olefinmonomere a) eine Ringspannung von mindestens 2 kcal/mol aufweisen und dass die polycyclischen Olefinmonomere b) ausgewählt sind aus bicyclischen Dienen mit einer Ringspannung von mindestens 15 kcal/mol.

4. Verfahren nach einem der vorhergehenden Ansprüche, **dadurch gekennzeichnet, dass** das Copolymer herstellbar ist durch ringöffnende Metathesepolymerisation von cis-Cycloocten und Dicyclopentadien.

5. Verfahren nach einem der vorhergehenden Ansprüche, **dadurch gekennzeichnet, dass** die Kautschukbestandteile des Kautschukmaterials ausgewählt sind aus Dienkautschuk, Naturkautschuk, Butylkautschuk, synthetischem Polyisopren, Polybutadien, Styrol-Butadien-Copolymer, Isopren-Butadien-Kautschuk, Styrol-Isopren-Butadien-Kautschuk, Acrylnitril-Butadien-Kautschuk, Ethylen-Propylen-Kautschuk und Chloroprenkautschuk.

6. Verfahren nach einem der vorhergehenden Ansprüche, **dadurch gekennzeichnet, dass** es sich bei dem Kautschukmaterial um einen Bestandteil eines Luftreifens handelt.

7. Verfahren nach dem vorhergehenden Anspruch, **dadurch gekennzeichnet, dass** es sich bei dem Kautschukmaterial um eine Reifeninnenschicht eines Luftreifens oder um eine Reifenkarkasse eines Luftreifens handelt.

8. Verwendung eines Copolymers zur Verringerung der Gasdurchlässigkeit von Kautschukmaterial, wobei das Copolymer herstellbar ist durch ringöffnende Metathesepolymerisation von
a) mindestens einem Olefinmonomer, ausgewählt aus der Gruppe bestehend aus monocyclischen Olefinmonomeren mit einer oder zwei endocyclischen C-C-Doppelbindungen und bicyclischen Olefinmonomeren mit einer endocyclischen C-C-Doppelbindung und
b) mindestens einem polycyclischen Olefinmonomer mit mindestens zwei C-C-Doppelbindungen.

9. Verwendung nach dem vorhergehenden Anspruch, **dadurch gekennzeichnet, dass** das Copolymer in Form einer wässrigen Dispersion des Copolymers zur Herstellung eines Barrierefilms verwendet wird.

10. Verwendung nach einem der vorhergehenden Verwendungsansprüche, **dadurch gekennzeichnet, dass** das molare Verhältnis von Olefinmonomeren a) zu polycyclischen Olefinmonomeren b) von 80:20 bis 15:85 beträgt und/oder das das Copolymere in einer Schichtdicke von mindestens 1 µm eingesetzt wird.

## Claims

1. A process for modifying a rubber material, where at least one copolymer is applied to the rubber material or is introduced into the rubber material, and the copolymer can be produced via ring-opening metathesis polymerization of
a)at least one olefin monomer selected from the group consisting of monocyclic olefin monomers having one or two endocyclic C-C double bonds and bicyclic olefin monomers having one endocyclic C-C double bond and
b) at least one polycyclic olefin monomer having at least two C-C double bonds, where the modification uses one or more of the following methods: impregnation, spraying, spreading, coating, calendaring; and/or where the copolymer is applied in the form of an aqueous dispersion of the copolymer and a film is formed via drying of the dispersion on the backing substrate.

2. The process according to the preceding claim, wherein the molar ratio of olefin monomers a) to polycyclic olefin monomers b) is from 99:1 to 15:85, preferably from 80:20 to 15:85.

3. The process according to any of the preceding claims, wherein the ring strain of the olefin monomers a) is at least 2 kcal/mol and the polycyclic olefin monomers b) have been selected from bicyclic dienes having ring strain of at least 15 kcal/mol.

4. The process according to any of the preceding claims, wherein the copolymer can be produced via ring-opening metathesis polymerization of cis-cyclooctene and dicyclopentadiene.

5. The process according to any of the preceding claims, wherein the rubber constituents of the rubber material have been selected from diene rubber, natural rubber, butyl rubber, synthetic polyisoprene, polybutadiene, styrene-butadiene copolymer, isoprene-butadiene rubber, styrene-isoprene-butadiene rubber, acrylonitrile-butadiene rubber, ethylene-propylene rubber, and chloroprene rubber.

6. The process according to any of the preceding claims, wherein the rubber material is a constituent of a pneumatic tire.

7. The process according to the preceding claim, wherein the rubber material is an inner layer of a pneumatic tire or is a carcass of a pneumatic tire.

8. The use of a copolymer for reducing the gas permeability of rubber material, where the copolymer can be produced via ring-opening metathesis polymerization of
a)at least one olefin monomer selected from the group consisting of monocyclic olefin monomers having one or two endocyclic C-C double bonds and bicyclic olefin monomers having one endocyclic C-C double bond and
b)at least one polycyclic olefin monomer having at least two C-C double bonds.

9. The use according to the preceding claim, wherein the copolymer is used in the form of an aqueous dispersion of the copolymer for producing a barrier film.

10. The use according to any of the preceding use claims, wherein the molar ratio of olefin monomers a) to polycyclic olefin monomers b) is from 80:20 to 15:85, and/or wherein the layer thickness used of the copolymer is at least 1 µm.

## Revendications

1. Procédé de traitement d'un matériau de caoutchouc, dans lequel au moins un copolymère est appliqué sur le matériau de caoutchouc ou introduit dans le matériau de caoutchouc, et le copolymère peut être préparé par polymérisation par métathèse par ouverture de cycle de
a) au moins un monomère oléfinique, choisi dans le groupe constitué par les monomères oléfiniques monocycliques contenant une ou deux doubles liaisons C-C endocycliques et les monomères oléfiniques bicycliques contenant une double liaison C-C endocyclique, et
b) au moins un monomère oléfinique polycyclique contenant au moins deux doubles liaisons C-C,
le traitement ayant lieu selon une ou plusieurs des méthodes suivantes : imprégnation par pénétration, par pulvérisation ou par enduction, revêtement, calandrage ; et/ou dans lequel le copolymère est appliqué sous la forme d'une dispersion aqueuse du copolymère et un film est formé par séchage de la dispersion sur le substrat support.

2. Procédé selon la revendication précédente, **caractérisé en ce que** le rapport molaire entre les monomères oléfiniques a) et les monomères oléfiniques polycycliques b) est de 99:1 à 15:85, de préférence de 80:20 à 15:85.

3. Procédé selon l'une quelconque des revendications précédentes, **caractérisé en ce que** les monomères oléfiniques a) présentent une tension de cycle d'au moins 2 kcal/mol et **en ce que** les monomères oléfiniques polycycliques b) sont choisis parmi les diènes bicycliques ayant une tension de cycle d'au moins 15 kcal/mol.

4. Procédé selon l'une quelconque des revendications précédentes, **caractérisé en ce que** le copolymère peut être préparé par polymérisation par métathèse par ouverture de cycle de cis-cyclooctène et de dicyclopentadiène.

5. Procédé selon l'une quelconque des revendications précédentes, **caractérisé en ce que** les constituants caoutchouc du matériau de caoutchouc sont choisis parmi le caoutchouc diénique, le caoutchouc naturel, le caoutchouc de butyle, le polyisoprène synthétique, le polybutadiène, le copolymère de styrène-butadiène, le caoutchouc d'isoprène-butadiène, le caoutchouc de styrène-isoprène-butadiène, le caoutchouc d'acrylonitrile-butadiène, le caoutchouc d'éthylène-propylène et le caoutchouc de chloroprène.

6. Procédé selon l'une quelconque des revendications précédentes, **caractérisé en ce que** le matériau de caoutchouc est un constituant d'un pneu.

7. Procédé selon la revendication précédente, **caractérisé en ce que** le matériau de caoutchouc est une couche intérieure d'un pneu ou une carcasse d'un pneu.

8. Utilisation d'un copolymère pour réduire la perméabilité aux gaz d'un matériau de caoutchouc, dans laquelle le copolymère peut être préparé par polymérisation par métathèse par ouverture de cycle de
a) au moins un monomère oléfinique, choisi dans le groupe constitué par les monomères oléfiniques monocycliques contenant une ou deux doubles liaisons C-C endocycliques et les monomères oléfiniques bicycliques contenant une double liaison C-C endocyclique, et
b) au moins un monomère oléfinique polycyclique contenant au moins deux doubles liaisons C-C.

9. Utilisation selon la revendication précédente, **caractérisée en ce que** le copolymère est utilisé sous la forme d'une dispersion aqueuse du copolymère pour la fabrication d'un film de barrière.

10. Utilisation selon l'une quelconque des revendications d'utilisation précédentes, **caractérisée en ce que** le rapport molaire entre les monomères oléfiniques a) et les monomères oléfiniques polycycliques b) est de 80:20 à 15:85 et/ou **en ce que** le copolymère est utilisé en une épaisseur de couche d'au moins 1 µm.
